# EUROPEAN PATENT SPECIFICATION

(11) **EP 1 403 321 B1**
(45) Date of publication and mention of the grant of the patent: **12.10.2005**
(21) Application number: 02728091.6
(22) Date of filing: 20.05.2002
(51) Int. Cl.: C08L 67/02, E04G 9/00, E04G 9/05

(54) **FORM MADE FROM RECYCLED RESIN**
FORM AUS REZYKLIERTEM HARZ
FORME FAITE DE RESINE RECYCLEE

(30) Priority: 18.05.2001 JP 2001148754
(43) Date of publication of application: 31.03.2004
(73) Proprietor: DAICEL CHEMICAL INDUSTRIES, LTD., Sakai-shi, Osaka 590-0905 (JP)
(72) Inventor: OKUMURA, Kouichi, Matsudo-shi, Chiba 270-0021 (JP); KOTANI, Kazuya, Saeki-gun, Hiroshima 739-0445 (JP); MIZUTANI, Yoshinobu, Yokkaichi-shi, Mie 510-0012 (JP); OCHIAI, Genichiro, Toride-shi, Ibaraki 302-0034 (JP); ENDO, Shunichi, Tsukuba-gun, Ibaraki 300-2302 (JP)
(74) Representative: Benson, John Everett
(86) International application number: PCT/JP2002/004853
(87) International publication number: WO 2002/094934

(56) References cited:
- EP-A- 0 515 990
- EP-A- 1 050 559
- JP-A- 6 328 420
- DATABASE WPI Section Ch, Week 200035 Derwent Publications Ltd., London, GB; Class A23, AN 2000-411942 XP002311696 & JP 2000 154282 A (DAICEL CHEM IND LTD) 6 June 2000 (2000-06-06)

## Description

### TECHNICAL FIELD

The present invention relates to a form for use in placing concrete, which is made from a recycled resin, and more specifically to a form for use in placing concrete, which is made from a recycled polyester resin composition, improved in formability such as injection moldability or extrusion moldability, and which has excellent mechanical strength.

### BACKGROUND ART

Conventionally, when a building is constructed, a foundation made of concrete for transferring self-weight of the building to the supporting ground is first constructed at the lowest portion. The foundation made of concrete is constructed by digging the ground, placing in the hollow ballast and leveling the concrete, arranging underground beams and bases and the like, setting up a form, and placing concrete in the form. In particular, an expansion type lath form made of metallic network is known that allows rapid extraction of excess water and air (water containing a small amount of cement components, generally called as white wash) in the concrete from a side of the form to the outside. The metallic lath form is used as follows. That is, concrete is filled between a pair of lath forms and after hardening, the lath forms are removed from the concrete for reuse. Accordingly, when a number of supports used for setting lath forms are detached from the lath forms, the white wash that flows out of the lath forms flows toward outside the lower parts of the forms, so that the supports are detached while the white wash is removed. Specifically, since the lower part of the support is embedded with cement paste that has flown out of the metallic' lath form, the embedded part must be dug out. This operation needs much time and labor. Further, for setting up conventional metallic lath forms, fastening hardware for positioning the lower end thereof and fastening hardware for positioning the upper end thereof are needed. This increases the number of components and sometimes makes the operation extremely complicated.

On the other hand, in terms of a material therefor, various applications of waste plastics have been examined. For example, polyester resins are used in a large amount because they are light weight, high in strength, excellent in water resistance, chemical resistance, and electrical insulation property, and easy to mold. In particular, a polyethylene terephthalate, which is usually abbreviated toa PET, is mass-produced for use in bottles for beverages because it is light weight, durable, and excellent in transparency. Recently, the Containers and Packaging Recycling Law is enforced, and under the circumstances, measures regarding recycling of plastics have progressed. Further, recycling of PET bottles is desired according to a worldwide trend. However, since a recycled PET material involves a problem of poor moldability, it is difficult' to process the recycled material and to obtain molded products by the injection molding method which is usually applied for general-purpose resins such as a polyolefin resin. For that reason, use of the recycled PET materials is limited, and an application of the recycled PET materials has not necessarily progressed.

Further, the recycled PET materials result from crushing of recollected bottles for beverages, textiles, films, etc., and thus usually take irregular shapes or flake-like shapes, which leads to materials bulky and inferior in transport efficiency. Accordingly, it is desired that the recycled PET materials have a pellet-like shape in consideration of transport efficiency. However, since the moldabilityis poor, preparation of uniform pellets is difficult, which is inconvenient when obtaining various types of molded products.

An object of the present invention is to provide a form for use in placing concrete, which is made of a recycled resin using a recycled polyester resin composition which is improved in formability such as injection moldability or extrusion moldability, and has excellent mechanical strength. Incidentally, use of thermoplastic plastics for the above-mentioned form is disclosed in Japanese Utility Model Registration No. 3,057,777. However, it has been neither described nor suggested therein to improve moldability and the like of a recycled PET that has poor moldability and use the PET as in the present invention.

### DISCLOSURE OF THE INVENTION

The inventors of the present invention have found the following, thereby accomplishing the present invention.
(i) Use of a recycled polyester resin composition containing a recycled polyester material and specified amounts of a lactone polymer, an epoxidized diene based block copolymer, and optionally a polyolefin resin can efficiently attain the object relating to the above-mentioned material.
(ii) Studies on production of forms for use in placing concrete by using the above-mentioned material indicate that the material can be utilized for various forms such as a water-pervious lath form, a placing lath form, a water-pervious porous form, a placing porous form, a water-pervious ribbed porous form, and a placing ribbed porous form, and thus is cost-effective.
(iii) In the case of, among others, ribbed porous forms, it is sufficient that supports that support the forms be arranged in the horizontal direction when the forms are set up, so that detachment of the supports after filling concrete becomes extremely easy.
(iv) In particular, when a form is made to have a structure in which ribs are formed so as to protrude on a side opposite to a concrete placing plane, the ribs serve as substitutes for form support members such as stiffeners or increase the rigidity of the form to prevent a decrease in width of the constructed foundation in the rib portion, thereby avoiding a disadvantage in view of strength. In addition, conversely the width of the foundation is increased in the ribportion, which is advantageous in performance of concrete. Further, since a plurality of through holes for air vent are provided in a protruded portion in each rib, air does not remain in the rib portion, or the like, so that voids where concrete is not filled will hardly occur.

That is, according to a first aspect of the present invention, there is provided a recycled resin form for use in placing concrete, the form including a recycled polyester resin composition including 100 parts by weight of a recycled polyester resin (A), 0.5 to 20 parts by weight of a lactone polymer (B), 0.5 to 30 parts by weight of an epoxidized diene based block copolymer (C), and 0.5 to 30 parts by weight of a polyolefin resin (D) that is optionally added.

According to a second aspect of the present invention, there is provided a recycled resin form as described in the first aspect of the present invention, characterized in that the recycled polyester resin (A) contains at least a recycled polyethylene terephthalate resin.

According to a third aspect of the present invention, there is provided a recycled resin form as described in the first or second aspect of the present invention, characterized in that the epoxidized diene based block copolymer (C) is an epoxidized product of a block copolymer or its partially hydrogenated product, the block copolymer being composed of a block made of a vinyl aromatic compound and a block made of a conjugated diene compound.

According to a fourth aspect of the present invention, there is provided a recycled resin form as described in any one of the first to third aspects of the present invention, characterized in that the polyolefin resin (D) is a polypropylene resin.

According to a fifth aspect of the present invention, there is provided a recycled resin form as described in any one of the first to fourth aspects of the present invention, characterized by being a form for use in placing a concrete foundation portion and being embedded underground after the placing.

According to a sixth aspect of the present invention, there is provided a recycled resin form as described in any one of the first to fifth aspects of the present invention, characterized by being at least one selected from the group consisting of a water-pervious form, a placing form, and a veneer form.

According to a seventh aspect of the present invention, there is provided a recycled resin form as described in the sixth aspect of the present invention, characterized in that the water-pervious form is at least one selected from the group consisting of a lath form, a porous form, and a ribbed porous form.

According to an eighth aspect of the present invention, there is provided a recycled resin form as described in the sixth aspect of the present invention, characterized in that the placing form is at least one selected from the group consisting of a lath form, a porous form, and a ribbed porous form.

According to a ninth aspect of the present invention, there is provided a recycled resin form as described in any one of the sixth to eighth aspects of the present invention, characterized in that the water-pervious lath form and the placing lath form each are a square plate-like face plate (1) that includes belts, strings or threads made of a recycled polyester resin compound which are combined and fused together in the form of a mesh through which water can be removed.

According to a tenth aspect of the present invention, there is provided a recycled resin form as described in the sixth aspect of the present invention, characterized in that the water-pervious porous form and the placing porous form each are a square plate-like faceplate (1) provided with a number of through holes (4) for removing excess water and air.

According to an eleventh aspect of the present invention, there is provided a recycled resin form as described in the seventh or eighth aspect of the present invention, the form further including: a flange portion (2) extending at a lower end of the face plate (1) to a side opposite to a concrete placing side (8), or a flange portion (2a) extending at an upper end of the face plate (1) to the same side as the concrete placing side (8); and optionally a flange portion (2') provided at a left end or a right end of the face plate (1) and arranged in the same plane as the face plate (1) or at right angles with respect to the face plate (1).

According to a twelfth aspect of the present invention, there is provided a recycled resin form as described in any one of the sixth to eighth aspects of the present invention, characterized in that the water-pervious ribbed porous form and the placing ribbed porous form each include a rectangular face plate (1) provided with a number of ribs (3) arranged in a vertical direction of the rectangular face plate (1) at predetermined intervals, the face plate (1) having provided on its flat portion (1') a number of through holes (4), each of the ribs (3) forming a protrusion protruding on the same side as the concrete placing side (8) or on a side opposite to the concrete placing side (8), the formed protrusion being optionally provided with a plurality of air vent holes (7).

According to a thirteenth aspect of the present invention, there is provided a recycled resin form as described in the tenth aspect of the present invention, the form further including a flange portion (2) extending at a lower end of the face plate (1) to a side opposite to a concrete placing side (8), or a flange portion (2a) extending at an upper end of the face plate (1) to the same side as the concrete placing side (8).

According to a fourteenth aspect of the present invention, there is provided a recycled resin form as described in the tenth or eleventh aspect of the present invention, further including ribs (3) which are provided on the face plate (1) from a position slightly above a lower end to an upper end of the face plate (1), or from a position slightly below the upper end to the lower end of the face plate (1).

According to a fifteenth aspect of the present invention, there is provided a recycled resin form as described in any one of the first to twelfth aspects of the present invention, which has a thickness that allows the form to be readily processed and deformed by heating.

According to a sixteenth aspect of the present invention, there is provided a recycled resin form as described in the ninth or eleventh aspect of the present invention, characterized in that the flange portion (2) is provided with a fixing hole (5).

According to a seventeenth aspect of the present invention, there is provided a recycled resin form as described in any one of the ninth, eleventh, and fourteenth aspects of the present invention, characterized in that the face plate (1) and the flange portion (2) or (2a) forms an angle that is slightly smaller than 90°.

According to an eighteenth aspect of the present invention, there is provided a recycled resin form as described in any one of the eighth to fifteenth aspects of the present invention, characterized in that each of the through holes (4) has a peripheral portion slightly protruding with respect to the face plate (1) in a cylindrical fashion.

According to a nineteenth aspect of the present invention, there is provided a recycled resin form as described in any one of the eighth to fifteenth aspects of the present invention, characterized in that each of the through holes (4) has a peripheral portion that is formed in the form of a funnel.

According to a twentieth aspect of the present invention, there is provided a recycled resin form as described in any one of the eighth to seventeenth aspects of the present invention, characterized in that the face plate (1) is transparent or translucent.

According to a twenty-first aspect of the present invention, there is provided a recycled resin form as described in any one of the sixth to twentieth aspect of the present invention, characterized in that the through holes (4) each have a circular or rectangular cross section and a diameter or a maximum side of 5 to 15 mm.

### BRIEF DESCRIPTION OF THE DRAWINGS

Fig. 1 is a perspective view of a recycled resin form of the present invention, used as a lower end form 6-1.
Fig. 2 is a perspective view of a recycled resin form of the present invention, used as an upper end form 6-2.
Fig. 3 is an enlarged sectional view taken along an arrow of III-III of Fig. 1.
Fig. 4 is an enlarged sectional view taken along a line IV-IV of Fig. 1.
Fig. 5 is an enlarged sectional view taken along a line V-V of Fig. 2.
Fig. 6 is a schematic perspective view of an intermediate form 6-3 located midway between a top and a bottom of a recycled resin form of the present invention.
Fig. 7 is a perspective view of a spacer 9 used for a recycled resin form of the present invention.
Fig. 8 is a schematic perspective view illustrating a vertically set state of a recycled resin formof the present invention.
Fig. 9 is a side view of another example of a recycled resin form of the present invention.
Fig. 10 is an explanatory diagram of an upper portion illustrating a state in which concrete is filled in a recycled resin form of the present invention.
Fig. 11 is an explanatory diagram illustrating a lower end of a form taking an example of a pair of lower end forms 6-1 of the present invention.
Fig. 12 is an explanatory diagram illustrating another example of a recycled resin form of the present invention.
Fig. 13 is a partial perspective view of still another example of a recycled resin form of the present invention and its sectional view taken along a line A-A.
Fig. 14 is a partial perspective view illustrating the form shown in Fig. 13 used to construct a state where placing concrete is possible.
Fig. 15 is a partial perspective view of yet another example of a recycled resin form of the present invention and its sectional view taken along a line B-B.

### BEST MODE FOR CARRYING OUT THE INVENTION

Hereinafter, an embodiment mode of the present invention will be explained.

### I. First, a recycled polyester resin composition to be used as a form material in the present invention will be explained in detail.

### Recycled polyester resin (A)

The "polyester resin" as referred to in the present invention means a polyester obtained by polycondensation between a dicarboxylic acid compound and a dihydroxy compound, polycondensation of an oxycarboxylic acid compound, or polycondensation of the three component compounds or the like. The polyester resin may be either a homopolyester or a copolyester.

Examples of the dicarboxylic acid compound that constitutes the polyester resin to be used herein include: known dicarboxylic acids such as terephthalic acid, isophthalic acid, naphthalenedicarboxylic acid, diphenyldicarboxylic acid, diphenyl ether dicarboxylic acid, diphenylethanedicarboxylic acid, cyclohexanedicarboxylic acid, adipic acid, and sebacic acid; and alkyl, alkoxy, or halogen substituted derivatives thereof. Further, the dicarboxylic acid compounds can be used for polymerization in a form of an ester formable derivative, for example, a lower alcohol ester such as a dimethyl ester.

Next, examples of the dihydroxy compound that constitutes the polyester resin as referred to in the present invention include: dihydroxy compounds such as ethylene glycol, propylene glycol, butanediol, neopentyl glycol, hydroquinone, resorcin, dihydroxyphenyl, naphthalenediol, dihydroxydiphenyl ether, cyclohexanediol, 2,2-bis(4-hydroxyphenyl)propane, and diethoxylated bisphenol A; polyoxyalkylene glycol; and alkyl, alkoxy, or halogen substituted derivatives thereof. Those may be used alone or as mixtures of two more of them.

Examples of the oxycarboxylic acid include: oxycarboxylic acids such as oxybenzoic acid, oxynaphthoic acid, and diphenyleneoxycarboxylic acid; and alkyl, alkoxy, or halogen substituted derivatives thereof. Ester formable derivatives of those compounds may also be used. The above-mentioned compounds may be used alone or as mixtures of two or more of them.

Further, in addition to those, polyesters each having a branched or crosslinked structure obtained by using a small amount of a trifunctional monomer, that is trimellitic acid, trimesic acid, pyromellitic acid, pentaerythritol, trimethylolpropane or the like fall in the polyester resin as referred to in the present invention. Furthermore, the polyester resin as referred to in the present invention may be those obtained by modifying polyester resins by a known method such as crosslinking, or graft polymerization.

The polyester resin as referred to in the present invention may be appropriate for any polyester resin that is produced by use polycondensation of the above-mentioned compounds as monomers and mixtures of two or more of them. Examples of the polyester resin include polyethylene terephthalate (PET), polybutylene terephthalate (PBT), and polyethylene naphthalate (PEN). Preferably, the recycled polyester resin (A) contains at least PET. More preferably, the resin contains PET as a main component. Particularly preferably, the resin is composed of PET. PEN can be used for a plastic wire as a substitute for a wire.

PET usually is obtained by reacting terephthalic acid or its ester formable derivative (for example, a lower alkyl ester such as dimethyl ester or monomethyl ester) and ethylene glycol or its ester formable derivative as raw materials under heating in the presence of a catalyst, and then polymerizing the resultant terephthalic acid glycol ester in the presence of a catalyst to a predetermined degree of polymerization.

In the present invention, the above-mentioned polyester resins that have been used as articles such as bottles for beverages, textiles, films or large molded articles, for example, containers are collected and processed for reuse, and the resultant resins are termed recycled polyester resins. They are also called as recycled materials or recycled resins.

The recycled polyester resins to be used in the present invention are not particularly limited to forms of articles of the polyester resins to be recycled. Specific examples thereof include recycle processed articles such as bottles for beverages, textiles, films, molded articles. Also, although not practically used as articles, recycled materials such as film end materials, injection molding gate, and runner members, which are generated during the production of articles, may be used.

### Lactone polymer (B)

As the lactone polymer (B) to be used in the present invention is preferably a polymer that can be obtained by ring-opening polymerization of lactones each having 4 to 11 carbon atoms. A preferable lactone polymer made of lactones each having 4 to 11 carbon atoms includes poly(ε-caprolactone). Also, in addition to ε-caprolactone, copolymers obtained by use of comonomers such as valerolactone, glycolide, and lactide can be used as lactone polymers. Further, besides the above-mentioned lactone polymers, polycaprolactones with blocked terminal groups (hereinafter, referred to simply as "terminal blocked polycaprolactones") can be used.

The production method for the above-mentioned lactone polymer (B) is not particularly limited. For example, the lactone polymer (B) can be obtained by adding a polymerization initiator to a lactone monomer, more preferably adding a polymerization catalyst thereto, and reacting the mixture under stirring at 120 to 230°C, preferably 140 to 220°C for several hours.

The polymerization initiator to be used in the production of a lactone polymer (B) is water or a compound having a hydroxyl group at a terminal, and examples of the compound having the hydroxyl group at the terminal include: monohydric alcohols such as n-hexyl alcohol, n-heptyl alcohol, n-octyl alcohol, n-nonyl alcohol, lauryl alcohol, and myristyl alcohol; glycols such as ethylene glycol, propylene glycol, ethylethylene glycol, 2-methyl-1,2-propanediol, pinacol, β-butylene glycol, diethylene glycol, tetramethylene glycol, neopentyl glycol, and 1,4-cyclohexanedimethanol; trihydric alcohols such as glycerin, 1,2,3-butanetriol, and 1,2,3-pentanetriol; tetrahydric alcohols such as erythrite and pentaerythritol; aromatic alcohols such as phenol, bisphenol-A, 2,4,6-tribromophenol, and tetrabromobisphenol-A; monovalent carboxylic acids such as benzoic acid, p-methylbenzoic acid, lauric acid, myristic acid, 2,3,4-tribromobenzoic acid, and pentabromobenzoic acid; divalent carboxylic acids such as isophthalic acid, phthalic acid, terephthalic acid, 2,6-naphthalenedicarboxylic acid, 4,4'-diphenoxyethanedicarboxylic acid, succinic acid, adipic acid, sebacic acid, azelaic acid, decadicarboxylic acid, cyclohexanedicarboxylic acid, tetrachlorophthalic acid, and tetrabromoterephthalic acid; trivalent carboxylic acids such as tricarballylic acid, trimelissic acid, and trimellitic acid; tetravalent carboxylic acids such as pyromellitic acid; and oxycarboxylic acids such as ε-oxycarboxylic acid and hydroxyethoxybenzoic acid.

Further, as the polymerization catalyst, there can be employed a variety of organic or inorganic metallic compounds, etc., specifically, tetrabutyl titanate, tetraisopropyl titanate, tetraethyl titanate, dibutyltin oxide, dibutyltin laurate, tin octylate, stannous chloride, etc. The amount of catalysts to be used is 0.1 to 1,000 ppm, preferably 0.5 to 500 ppm with respect to starting raw materials.

The molecular weight of the lactone polymer (B) is 1,000 to 500,000, preferably 5,000 to 200,000, more preferably 10,000 to 100,000 as a number average molecular weight. In the case that the number average molecular weight of the lactone polymer (B) is less than 1,000, an effect of improving the moldability of the recycled polyester resin is not sufficient, and in the case that the number average molecular weight is more than 500, 000, the lactone polymer (B) has trouble to be melt-kneaded into the recycled polyester resin.

### Epoxidized diene based block copolymer (C)

The epoxidized diene based block copolymer (C) to be used in the present invention is an epoxidized product of a block copolymer or its partially hydrogenated product, the copolymer being composed of a block made of a vinyl aromatic compound and a block made of a conjugated diene compound.

The diene based block copolymer has a weight ratio of the vinyl aromatic compound to the conjugated diene compound (weight ratio of the block copolymer) of preferably 25/75 to 95/5, more preferably 25/75 to 80/20. The block copolymer to be used in the present invention has a number average molecular weight in the range of 5,000 to 1,000,000, preferably 10,000 to 800,000, and a molecular weight distribution [ratio (Mw/Mn) of weight average molecular weight (Mw) to number average molecular weight (Mn)] of 10 or less. The molecular structure of the block copolymer may be any one of linear, branched, and radial, or any combination of these. For example, the block copolymer is a vinyl aromatic compound (X) block-conjugated diene compound (Y) block copolymer having a structure of X-Y-X, Y-X-Y-X, (X-Y-)₄Si, or X-Y-X-Y-X. Further, unsaturated bonds of the conjugated diene compounds in the diene based block copolymer may be partially hydrogenated.

Examples of the vinyl aromatic compound that constitutes the diene based block copolymer may include one kind or two kinds or more of compounds selected from, for example, styrene, α-methylstyrene, vinyltoluene, p-tertiary butylstyrene, divinylbenzene, p-methylstyrene, and 1,1-diphenylstyrene. Of those, styrene is preferable. On the other hand, examples of the conjugated diene compound may include one kind or two kinds or more selected from, for example, butadiene, isoprene, 1,3-pentadiene, 2,3-dimethyl-1,3-butadiene, piperylene, 3-butyl-1,3-octadiene, and phenyl-1,3-butadiene. Of those, butadiene, isoprene, and combinations of these are preferable.

The production method for the block copolymers to be used in the present invention may be any production method so far as it can provide a product that has the above-mentioned structure. For example, a vinyl aromatic compound-conjugated diene compound block copolymers can be synthesized in an inert solvent using a lithium catalyst or the like by the methods described in JP 40-23798 B, JP 51-33184 A, etc. Further, the partially hydrogenated block copolymers to be used in the present invention can be synthesized by hydrogenation in an inert solvent in the presence of a hydrogenation catalyst by the method described in JP 42-8704 B, JP 43-6636 B, or JP 59-133203 A.

The epoxidized diene based block copolymer (C) can be obtained by reacting the above-mentioned block copolymers with epoxidizing agents such-as hydroperoxides and peracids in an inert solvent. Examples of the peracids include performic acid, peracetic acid, andperbenzoicacid. In the case of hydroperoxides, a catalyst effect can be obtained by using hydrogen peroxide and a mixture of tungstic acid and sodium hydroxide, an organic acid and hydrogen peroxide, or molybdenum hexacarbonyl and tertiary butyl hydroperoxide.

The use amount of the epoxidizing agent is not strictly limited. An optimal amount in each case is determined depending on variable factors such as the kind of the epoxidizing agent to be used, the desired degree of epoxidation, and the kind of block copolymer to be used.

Isolation of the obtained epoxidized diene based block copolymer can be performed by an appropriate method, for example,' a method in which the product is precipitated in a poor solvent, a method in which the polymer is put in hot water under stirring and the solvent is removed by distillation, and a method in which the solvent is directly removed. The resultant epoxidized diene based block copolymer (C) has an epoxy equivalent in the range of preferably 320 to 8,000.

### Polyolefin resin (D)

The polyolefin resin (D) to be used in the present invention may be optionally selected from the group consisting of: olefin polymers such as a polyethylene, a polypropylene, a poly-1-butene, a poly-1-pentene, and the like, and a mixture thereof; copolymers obtained from ethylene, propylene, 1-butene, and 1-pentene, and the like, and a mixture thereof; polyolefin based elastomers such as an ethylene/propylene rubber (EPM, EPR), and an ethylene/propylene/diene terpolymer (EPDM, EPD, EPT), and a mixture thereof; a mixture of the polyolefin based elastomer with an olefin polymer such as a polyethylene, a polypropylene, and an ethylene/propylene copolymer; a copolymer with other vinyl based monomer primarily containing an olefin; and a mixture of two or more kinds of those described above.

### Blending amount of each component

The recycled polyester resin composition of the present invention is formed by blending 0.5 to 20 parts by weight of the lactone polymer (B), 0.5 to 30 parts by weight of the epoxidized diene based block copolymer (C), and optionally 0.5 to 30 parts by weight of the polyolefin resin (D) per 100 parts by weight of the recycled polyester resin (A). Here, if the amount of the lactone polymer (B) is less than 0.5 parts by weight per 100 parts by weight of the recycled polyester resin (A), a moldability improving effect on the recycled polyester resin is not exhibited. On the other hand, if the amount of the lactone polymer (B) is more than 20 parts by weight per 100 parts by weight of the recycled polyester resin (A), a disadvantage occurs in that the strength of the recycled polyester resin is decreased.

To the composition of the present invention, inorganic compounds, organic compounds, or other resin additives may be added as other additives.

Examples of the resin additives include stabilizers, colorants, weather resistant agents (ultraviolet absorbents), lubricants, antistatic agents, extenders, reinforcing materials such as glass fibers, carbon fibers, metal fibers, and synthetic resin fibers, and other additives. In the case where transparence is not needed, inorganic additives such as talc and clay may be added.

### Production method and molding method for recycled polyester resin compositions

The recycled polyester resin composition of the present invention can be produced by a conventionally known method. For example, exemplified are a method in which the recycled polyester resin (A), the lactone polymer (B), the epoxidized diene based block copolymer (C), and the polyolefin resin (D) optionally added as well as other additives are melt-kneaded in an extruder, a kneader, a roll or a Banbury mixer, or a method in which particulate substances are mechanically mixed uniformly and then the resultant mixture is directly mixed and molded simultaneously in an injection molding machine.

The recycled polyester resin composition obtained as described above is easy to be processed into pellets and can be processed into moldings by extrusion molding, injection molding, compression molding or the like. The obtained moldings are excellent in not only mechanical strength but also heat resistance and electric insulation.

### II. Subsequently, a form for use in placing concrete, which is made from the above-mentioned recycled polyester resin composition, will be explained.

The above-mentioned recycled polyester resin composition is suitable for use as a material of a form for use in placing the concrete. The recycled resin form of the present invention is not limited so far as it is made from the above-mentioned material. As for specific examples, the recycled resin form of the present invention is used as a water-pervious lath form, a placing lath form, a water-pervious porous form, a placing porous form, a water-pervious ribbed porous form, a placing ribbed porous form, a veneer form or a panel related thereto, a plastic wire and so forth. The size of the form is not particularly limited and is preferably of a size that is convenient for setting it up. For example, the sizes of length and width of the form are combinations of any two of 30, 60, 90, 120, 180, and 240 cm, preferably 60 cm × 120 cm, 60 cm × 180 cm, 90 cm × 180 cm or the like. The thickness of the form is 0.5 to 10 mm; preferably, the form is molded as a plate-like material of 3 to 6 mm in thickness for the lath form, 1 to 3 mm for the porous form, 3 to 6 mm for the veneer form, thereby constituting the recycled resin form of the present invention. As a result, the form for use in placing the concrete can be produced at low cost. The recycled resin formof the present invention includes aplate-like face plate 1 on which preferably provided are a number of through holes 4 for extracting excess water and air. The cross section of the through holes 4 may be, for example, any one of circular, elliptical, rectangular, polygonal, D-shaped, star-shaped forms for each of the water-pervious lath form, placing lath form, water-pervious porous form, placing porous form, water-pervious ribbed porous form, and placing ribbed porous form. The diameter or equivalent diameter or maximum side length of the through hole 4 is about 1 to 15 mm, preferably about 2 to 10 mm, more preferably about 3 to 6 mm. By constructing the form so as to have a size in this range, the form allows extraction of excess water and air to the outside efficiently with preventing concrete itself from clogging and from being flown out when concrete is flown in an ordinary flow state from a concrete mixer into a form via a concrete compression feeder and a hose. Note that in the case where the through holes 4 are provided, it is preferable that the through holes 4 be provided as many as possible at a flat portion 1' of the face plate 1. In addition, a flange portion 2 can be formed on one end of the face plate 1 substantially at right angles to the face plate 1.

The recycled resin form of the present invention can be made transparent or translucent with respect to the whole form or at least the face plate part by using the above-mentioned material, so that concrete can be placed while being visually confirmed from outside, which makes management of construction easy and enables construction of a foundation having high quality.

Hereinafter, the recycled resin form of the present invention will be explained by taking a ribbed porous form as a representative example for the purpose of simplifying the description. However, the explanation contains items that are applicable to the above-mentioned other forms.

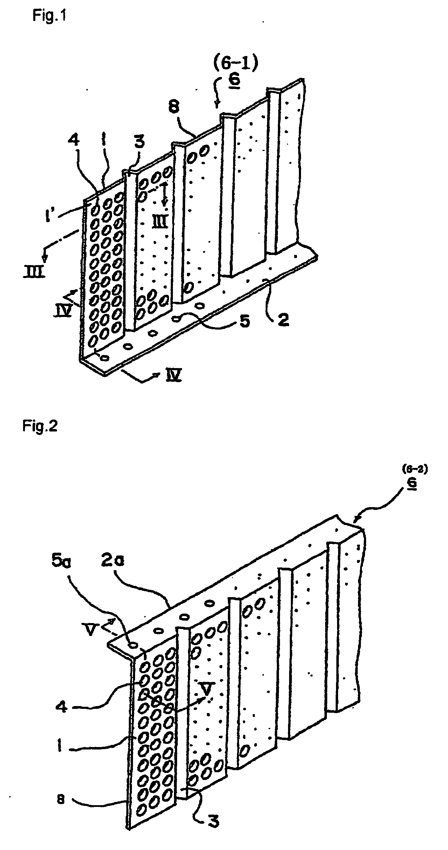

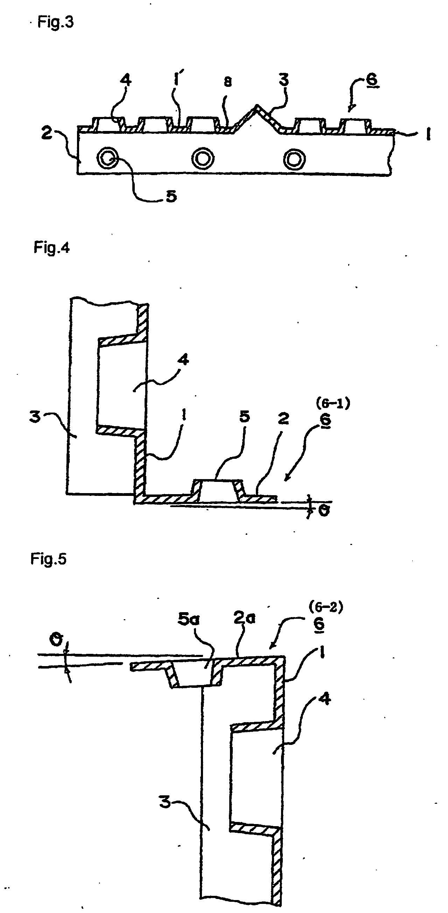

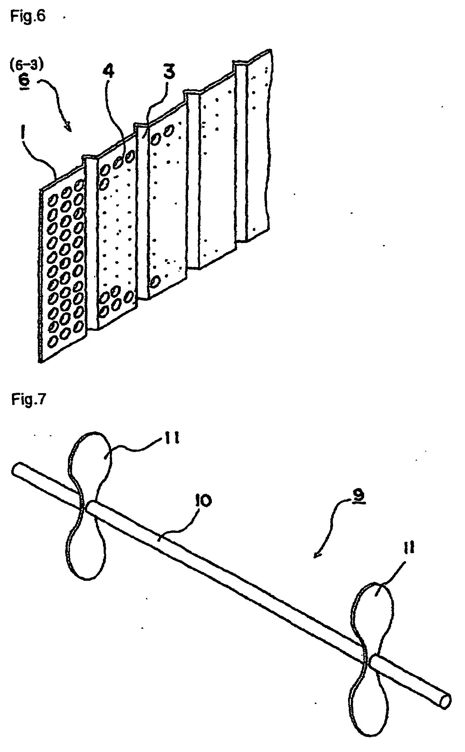

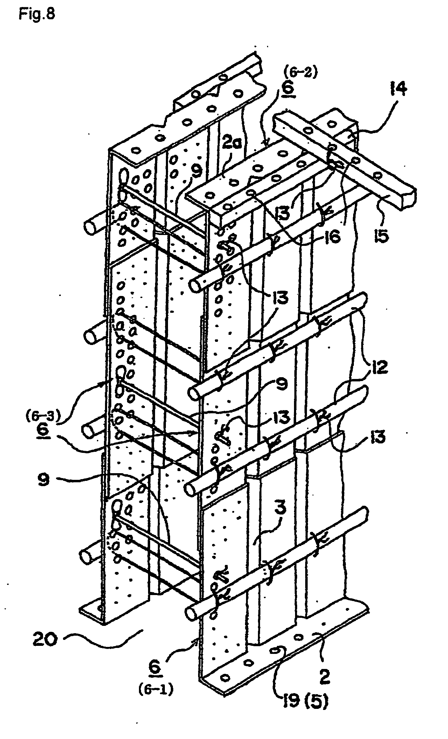

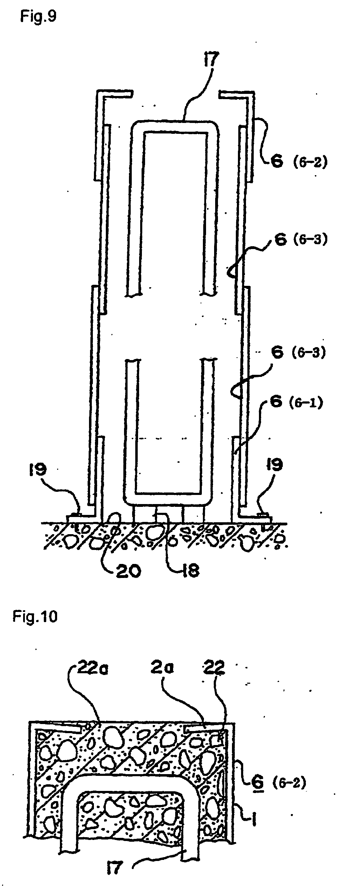

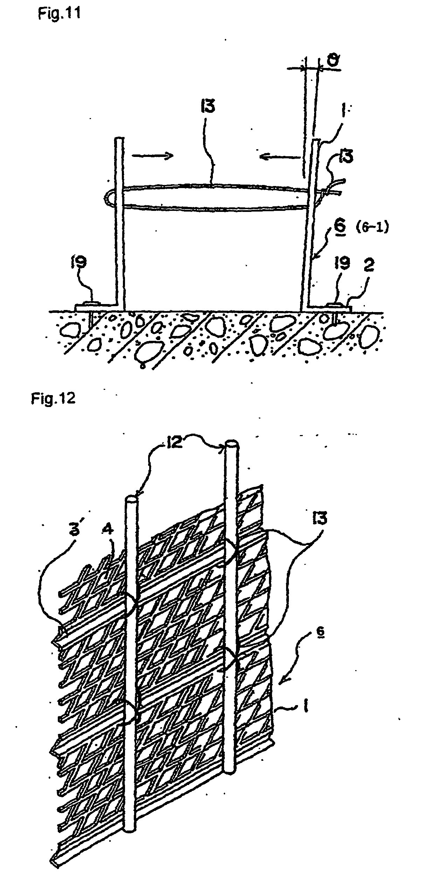

Fig. 1 is a perspective view showing an example of the recycled resin form (hereinafter, abbreviated as "the instant form") that is used as a lower end form 6-1. Fig. 2 is a perspective view of the same form as above that is used as an upper end form 6-2. Fig. 3 is an enlarged sectional view taken along an arrow of III-III of Fig. 1. Fig. 4 is an enlarged sectional view taken along a line IV-IV of Fig. 1. Fig. 5 is an enlarged sectional view taken along a line V-V of Fig. 2. Fig. 6 is a schematic perspective view of a form that is used as an intermediate form 6-3 located midway between a top and a bottom of the instant form. Fig. 7 is a perspective view of a spacer 9 used for the instant form. Fig. 8 is a schematic perspective view illustrating a vertically set state of the instant form. Fig. 9 is a side view illustrating a vertically set state of another example of the instant form. Fig. 10 is a sectional view of an upper portion of the same form as above illustrating a vertically set state of a state in which concrete is filled in the instant form. Fig. 11 is an explanatory diagram illustrating a vertically set state of a lower end of a form taking an example of a pair of lower end forms 6-1.

The lower end form 6-1 shown in Fig. 1 is located at the lowermost end in the whole form for foundation concrete. The upper form 6-2 shown in Fig. 2 is located at the uppermost end therein. The intermediate form 6-3 shown in Fig. 6 is located midway therebetween. The spacer 9 is arranged as intervening between a pair of forms opposite to each other.

The above-mentioned form has a face plate 1 in a form of a rectangular plate provided with a plurality of ribs 3 at predetermined intervals in the longitudinal direction. Provided on a flat portion 1' of the face plate 1 are a number of the above-mentioned through holes 4. On one end of the face plate 1 is provided with a flange portion 2 substantially at right angles to the face plate 1 and substantially at right angles to the ribs 3 in the direction opposite thereto.

The ribs 3 may be formed in the form of a triangle, trapezoid, or arc in cross-section. The face plate 1 is provided with a number of through holes 4 located close to each other overall the face plate 1. In this example, the through holes 4 slightly protrude in the form of a funnel on the inner side (the side where concrete is placed) of the form (see Fig. 3). Further, the flange portion 2 is formed so as to have an angle slightly smaller than right angle by θ with respect to the face plate 1 as shown in Fig. 4. The angle θ is preferably about 5°. Therefore, when a pair of lower end forms 6-1 are arranged opposite to each other, their distance is slightly larger at the upper ends than at the lower ends, so that the wall thickness can be readily adjusted by use of a wire or spacer such that the distance can be reduced. That is, the width of the form can be adjusted with better operability when the width is adjusted in the direction of reduction than in the direction of expansion. Accordingly, focusing on this point, the angle between the face plate 1 and the flange portion 2 is preliminarily set in the present invention. Further, a number of fixing holes 5 provided in the flange portion 2 at constant intervals are formed so as to slightly protrude in the form of a cylinder toward the outside. Note that a number of through holes 4 are arranged in a zigzag form in the up and down direction. This makes it possible to form more through holes 4 in the face plate 1.

Next, the upper form 6-2 shown in Fig. 2 has a flange portion 2a formed on the upper end of the face plate 1. The flange portion 2a is formed in the direction opposite to that of the lower end form 6-1. That is, like the ribs 3, the flange portion 2a protrudes on the inner side of the form. The flange portion 2a has a number of holes 5a formed at constant intervals. The angle between the flange portion 2a and the face plate 1 is slightly smaller than right angle, more particularly, smaller by angle θ (about 5°), as shown in Fig. 5. As a result, when concrete is filled in the form, the flange portion 2a except the peripheral portion thereof is embedded in the concrete, so that a finished surface of a foundation or the like having a good appearance can be formed.

The holes 5a can be formed in a slightly cylinder form in the peripheral portion thereof so as to be directed downward. In this construction, the cylinder protruded portion is embedded in the filled concrete, which increases integrity of the form and the concrete.

Further, the peripheral portions of through holes 4 formed into the form of a funnel enable the forms overlapping each other by virtue of the through holes 4. This facilitates alignment of the forms with each other. In addition, this makes it possible to compactly overlap each other when the forms are transported.

Next, the intermediate form 6-3 shown in Fig. 6 lacks the above-mentioned flange portions 2 and 2a in the above-mentioned lower end form 6-1 and upper end form 6-2, respectively. The through holes 4 and ribs 3 formed in the face plate 1 are the same as those in the other forms.

Next, the spacer 9 (shown in Fig. 7) intervening between a pair of forms is made of an ordinary wood or plastic material, preferably the above-mentioned material to be used in the present invention by injection molding. On both ends of a rod portion 10 are sphenoidally formed stopper portions 11 that cross perpendicularly thereto, preferably are integral to the rod portion. A root portion of a stopper portion 11 substantially retains a portion of the diameter of the rod portion 10. This is intended to wind a wire (wire separator, also called annealing wire) 13 around the form in a root area to fasten the form.

Next, the order in which an embedded portion of a foundation is constructed by use of the above-mentioned recycled resin form is described. First, the lower end form 6-1 is located on a leveling concrete 20 and concrete nails 19 are put into the fixing holes 5 in the flange portion 2 thereof to position and fix the lower end form 6-1 on the leveling concrete 20. Note that the lower end form 6-1 has the fixing holes 5 formed in the flange portion 2 thereof, so that the lower end form 6-1 can be positioned and fixed on the leveling concrete 20 extremely easily and rapidly without requiring other fastening hardware. This construction has a feature in that it is possible to constitute a form that entirely includes a smaller number of components.

Next, a number of the lower end forms 6-1 are arranged parallel along the foundation. The joint of adjacent lower forms 6-1 is formed by partially overlapping the forms at the ribs 3. Then, the upper end of the lower end form 6-1 is overlapped with the lower end of the intermediate form 6-3 and both the forms are fastened with a wire or the like. Further, the upper end of the intermediate form 6-3 is overlapped with the lower end of the upper form 6-2, and both the forms are fastened with a wire or the like. Then, as shown in Fig. 8, a pair of forms is arranged so as to align with the thickness of the foundation and a number of spacers 9 are inserted therebetween and both the ends of the rod portions 10 of the spaces are inserted in the through holes 4 in the face plate 1.

Then, the lower end forms 6-1 are fastened to each other with a wire, so that the stopper portions 11 of the spacers 9 abut the respective face plates 1. In the same manner, the upper forms 6-2 are fastened to each other and the intermediate forms 6-3 are fastened to each other with a wire 13. At the same time, a number of supports 12 are horizontally arranged so that the supports abut outer surfaces of the lower end form 6-1, the upper end form 6-2 and the intermediate form 6-3, and the respective supports 12 between a pair of opposing forms are fastened and fixed with the wire 13. Further, arranged on outside of the upper end of the upper end form 6-2 are upper end supports 14, which are fixed to the upper end form 6-2 through a wire, and the upper end supports 14 and the end of the supports 15 are fastened and fixed to each other through the wire 13. The other ends of the supports 15 are fixed to appropriate supports (not shown).

Note that to align an upper end face of the upper end form 6-2 at a predetermined height, it is only needed to adopt the following method. That is, a thing that serves as a measure, such as a leveling string (not shown) arranged horizontally at a predetermined height, is aligned with the flange portion 2a of the upper end form 6-2 in Fig. 8. On this occasion, the lower end portion of the upper end form 6-2 is overlapped with the upper end portion of the intermediate form 6-3. Then, a horizontal line is drawn along a lower periphery of the upper end form 6-2 on the side of the outside surface of the intermediate form 6-3 to effect marking, and subsequently the lower end of the upper form 6-2 is aligned with the horizontal line marking. In this manner, the upper end form 6-2 and the intermediate form 6-3 are fastened and fixed through a wire that passes through the through holes 4. Between the pair of forms thus assembled is arranged a reinforcing bar 17 in advance as shown in Fig. 9. Note that the lower end of the reinforcing bar 17 is arranged on a leveling concrete 20 through a spacer block 18 at a distance to provide a predetermined covering depth. Meanwhile, the opposing lower end form 6-1 situated at the lowermost end is formed such that the angle between the face plate 1 thereof and the flange portion 2 becomes an angle that is slightly smaller than 90°, that is, smaller by θ than 90°. Therefore, the face plate 1 is slightly slanted toward outside of the form, as shown in Fig. 11. Then, between the pair of lower end forms 6-1 is intervened the spacer 9 and the wire 13 is tied so as to clamp the pair of forms. Therefore, the target distance can be exactly maintained.

As described above, making the flange portion 2a of the upper form 6-2 flush with the upper end of the form makes its positioning easier.

Concrete is filled between the assembled forms. On this occasion, the flange portion 2a of the upper form 6-2 is embedded in the upper face 22a of the foundation concrete 22 as shown in Fig. 10. This is because the angle between the flange portion 2a and the face plate 1 of the upper end form 6-2 is made slightly smaller than 90°, that is, smaller by θ than 90°, with the result that the flange portion 2a is slanted downward in the inside of the leveling concrete 20. Excess water and air in the filled concrete are discharged to the outside from a number of through holes 4 in each form. Then, the concrete is left to stand for hardening. After that, the wire 13 is cut and the support 12 is detached. Then, soil is filled back on the outside of the foundation concrete 22. Note that when the support 12 itself is made of a waste plastic material, it is no longer necessary to detach the support and it is sufficient that soil is filled back with the support 12 being attached to the instant form.

When arranging the form of the present invention, it is only needed that the support 12 that supports the form be arranged in the horizontal direction, so that detachment of the support 12 after filling concrete becomes extremely easy. This is because, unlike conventional metal mesh lath type forms, the instant form does not substantially require a number of supports in the vertical direction. Therefore, the root portion of the support 12 in the vertical direction is not embedded in cement paste that flows through lath mesh after filling concrete, so that an operation to remove the cement paste in the embedded portion can be omitted. As a result, forms that allow extremely rapid construction can be provided. Further, the presence of the flange portions 2 and 2a integrally formed with the face plate 1 makes positioning of the upper end or lower end of the wall extremely easy. That is, the flange portions 2 and 2a can be made flush with a reference plane of the upper end or lower end, which makes manufacture of foundation concrete extremely easy.

Further, since a material that is easily deformable with heat by a burner or the like is used to make a thin form, it becomes extremely easy to deform the form in alignment with the corner portion or unevenness of the foundation. Further, upon the deformation, no noise is generated so that the construction can be performed quietly.

Fig. 12 is an explanatory diagram illustrating another example of the recycled resin form of the present invention. The porous form 6 has horizontal ribs 3'that extend horizontally at constant intervals as shown in Fig. 12. When concrete is filled inside the porous form 6, the porous form 6 allows excess water and air in the concrete to flow out of the form, so that supporting strength of the porous form 6 may be made lower than that of a veneer form. The porous form 6 of this kind is easy to assemble and requires no detachment of the porous form 6 itself, so that quick foundation construction can be performed.

The above-mentioned porous form 6 is assembled as follows. First, leveling concrete is placed in a bottom portion dug in the form of a groove along a foundation portion to be set up. After hardening of the leveling concrete, positioning of the lower end of the porous form 6 is performed by utilizing a rafter or positioning hardware, and supports 12 are set up there at constant intervals. Then, each portion of the porous form 6 and the supports 12 are tied with the wire 13. Subsequently, appropriate spacers are intervened between a pair of opposing porous forms 6 to maintain the distance therebetween at a constant interval. Further, positioning hardware (not shown) is arranged on the upper end of the porous form 6. The height of its upper end is aligned with the leveling string horizontally extended. Subsequently, the porous forms 6 are assembled in the same manner as in the above-mentioned example.

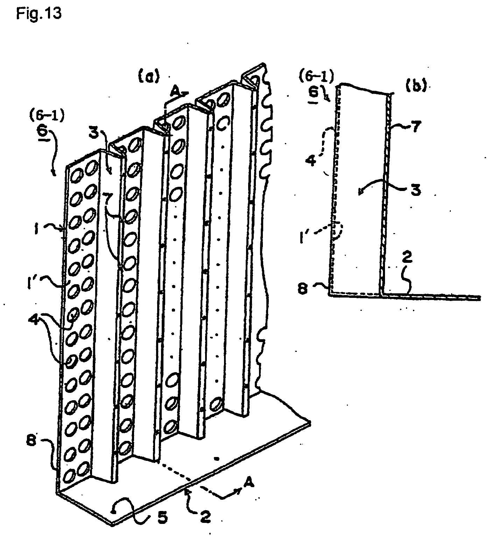

Fig. 13(a) is a partial perspective view showing another example of the recycled resin form of the present invention. Fig. 13(b) is a sectional view taken along a line A-A of Fig. 13(a). The form 6 shown therein is to be arranged in the lowermost portion. The direction in which the ribs protrude differs from that described above but a similar face plate can be used.

In this example, each rib 3 is formed so as to protrude on a side opposite to a concrete placing side 8. Each protrusion is provided with a plurality of air vent holes 7 arranged each in the longitudinal direction at predetermined intervals. The diameter of the air vent holes 7 is set to about 0.5 to 5 mm, preferably about 1 to 3 mm. By setting the diameter of the air vent holes 7 in this range, air can be efficiently withdrawn to the outside while clogging is prevented.

On the lower end of the face plate 1 is formed the flange portion 2 that extends to a side opposite to the concrete placing plane 8. The flange portion 2 is provided with a plurality of fixing holes 5. By utilizing the fixing holes 5, the form 6 can be readily fixed to the leveling concrete in the bottom of the dug groove with fixing hardware such as concrete nails.

In the above-mentioned form, if each rib is formed from a position slightly above the lower end of the face plate to the upper end of the face plate, a flange portion can be readily formed from a plate by bending.

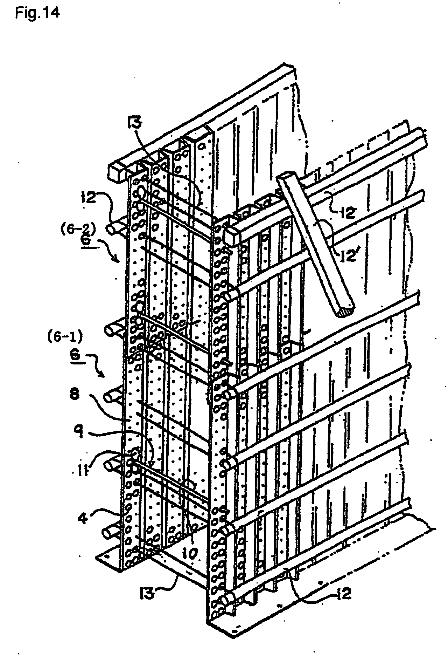

Next, the method of constructing a foundation made of concrete by using the above-mentioned form 6 will be explained. Fig. 14 is a partial perspective view showing that the forms 6 as shown in Fig. 13 are assembled into a state where concrete can be placed therein. To assemble the forms as shown in the figure, first, a pair of forms 6 is arranged as positioned in parallel at a predetermined distance therebetween on leveling concrete (not shown) in a dug supporting layer, and fixing hardware such as concrete nails are put in by using a plurality of fixing holes 5 provided in the flange portion 2 to form a lower end form 6-1. Since it is advantageous that the forms 6 be mass produced with predetermined dimensions, only a desired number of such forms 6 depending on the length of the foundation by in situ adjustment are sequentially arranged in the longitudinal direction along the foundation. On this occasion, joints in the width direction of the forms 6 are partially overlapped each other at the portion of the ribs 3.

Next, spacers 9 are inserted between the forms 6 opposing to each other in the lower end forms 6-1 and both ends of each spacer 9 are mounted by inserting the ends into the through holes 4 in each form 6. In this state, two stages, i.e., the lower portions and middle portions of the forms 6 are respectively tied with the wire 13. The wires 13 are tied in the form of a loop by inserting the wire through the through holes 4 in each form 6 by utilizing supports 12 constituted by pipes arranged horizontally outside the forms 6. The tied wire 13 and spacer 9 serve to exactly set up the distance of forms to a predetermined value.

Next, in the case where the height of the foundation is greater than that of a single form 6, the upper end portion of the lower end form 6-1 is overlapped on the lower end portion of the upper end form 6-2 and the overlapped portions are tied with the wire 13 in the same manner as described above. Note that used as the upper end form 6-2 is a form that is constructed in the same manner as the form 1 shown in Fig. 13 except that no flange portion 2 is present, and spacers 9 are mounted at the lower and upper portions thereof, respectively. Further, the middle portions and the upper end portions, respectively, of the upper end forms 6-2 are tied with each other with the wire 13 in the same manner as described above. As the supports 12 for the upper end portion, thick squared timbers of wood as shown in the figure are preferably used for reinforcement. Further, the support 12 for the upper end portion is coupled with a nail or wire to auxiliary supports 12' with a stiffener etc. made of wood fixed to a fixing member therearound, which is used for positioning.

In the example illustrated in Fig. 14, the upper end portion of the lower end form 6-1 is superposed on the lower end portion of the upper end form 6-2 to form a two-stage structure. However, in the case where a foundation with a smaller height is to be placed, it is sufficient to use only the lower form 6-1.

In the form thus constituted are arranged reinforcing bars for reinforcing concrete. When concrete is placed in the form, excess water and air are gradually discharged to the outside through the through holes 4 and the air residing in the ribs 3 is similarly discharged to the outside through the air vent holes 7.

Subsequent to the hardening of concrete, the same procedure as that described above is followed.

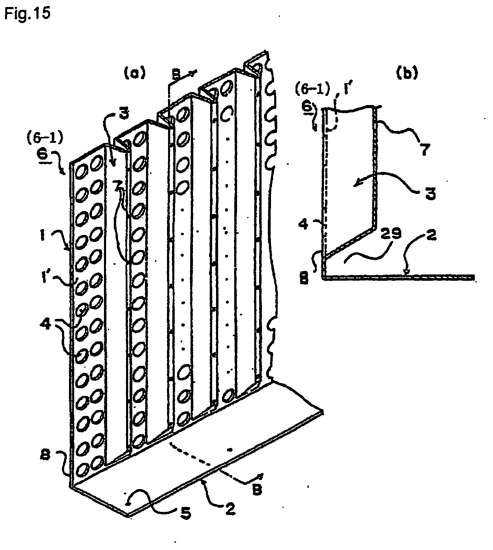

Fig. 15 (a) is a partial perspective view showing still another example of the recycled resin form of the repent invention and Fig. 15(b) is a sectional view taken along a line B-B of Fig. 15(a). The same parts as those in Fig. 13 are assigned the same reference numerals. This example differs from that shown in Fig. 13 in that each rib 3 is formed from a position slightly above the lower end of the face plate 1 to the upper end thereof and that the lower end portion of the rib 3 extends to reach a flat portion 1' as in a slanted state. In other points, this example is constructed in the same manner as in the example shown in Fig. 13. With this construction, a space portion 29 is formed beneath the rib 3, with the result that the flange portion 2 can be readily formed from a plate by bending.

Use of a form from which ribs protrude on a side opposite to the side where concrete is placed avoids the disadvantage in strength that would otherwise occur owing to a decrease in the width of the constructed foundation at a the rib portion. In addition, the width of the foundation is conversely enlarged at the rib portion, which leads to an advantage in performance. Further, apluralityof through holes for air venting provided in the protrusion in each rib portion prevent accumulation of air in the rib portion.

The present invention also discloses the following embodiments.
(1) A recycled resin form including: a face plate 1 having a plurality of ribs 3 arranged at predetermined intervals in the longitudinal direction and vertically protruding on one face of the face plate 1; and a flange portion 2 provided on one side in the longitudinal direction along the face plate 1, in which a flat portion 1' of the face plate 1 is free of a number of through holes 4 for extracting excess water and air.
(2) A recycled resin form according to embodiment (1) above, in which a plurality of holes for attaching jigs are provided in a face excepting the ribs 3 in the face plate 1.
   With this construction, attachment of jigs is performed by using a plurality of holes for attaching jigs and in addition excess water and air are extracted by using holes to which jigs are not attached, so that the strength of concrete is not decreased.
(3) A recycled resin form according to embodiment (1) or (2) above, in which the ribs 3 are not provided with air vent holes.
   With this construction, the recycled resin form itself is not deformed by the pressure upon charging concrete therein.
(4) A recycled resin form according to embodiment (1) or (2) above, including horizontal ribs 3' provided at predetermined intervals in the width direction, which protrude on the same face side as that of the ribs 3 in the face plate and cross the ribs 3.

With this construction, the strength of the recycled resin form can be further increased and at the same time the horizontal ribs 3' act to let air escape when concrete is placed since the ribs 3 and the horizontal ribs 3' cross each other. Further, since no air vent hole 7 is provided in the horizontal ribs 3' either, deformation of the recycled resin form itself by the pressure upon charging concrete therein is prevented.

Note that according to the present invention including the above-mentioned embodiments, a groove for bending the form may be provided in a boundary portion between the face plate 1 and the flange portion 2.

With this construction, the face plate in the form of a plane is folded into an L-form upon working, resulting in an improvement in workability for forming the flange portion 2 and in prevention of deformation of the form material.

Furthermore, a cornered panel bent at a desired site at a desired angle and having holes for attaching jigs, which is used by being applied onto a portion corresponding to the corner when a recycled resin form is used by being folded or when two recycled resin forms are used by being combined at different angles, can also be molded from the same material as that of the recycled resin form of the present invention.

The above-mentioned form for placing concrete may be either a form of the embedded type that can be used as an embedded type form for one-time use by, for example, being laid underground, or a form of the type for multiple-time use which can be repeatedly used on the ground from several tens to several hundreds of times.

### Example

Hereinafter, the present invention will be described in more detail based on examples. However, the present invention should not be considered to be limited to the following examples.

Note that Izod impact strength tests in production examples and comparative production examples were performed by preparing notched test pieces (3.2 mm thick) and carrying out measurements at 23°C according to ASTM D256.

### [Production Examples 1 to 12]

A recycled polyester resin (manufactured by Taisei Plastics Co. Ltd., PET), a lactone polymer (manufactured by Daicel Chemical Industries, Ltd., PLACCEL H7 [poly(ε-caprolactone) with a number average molecular weight of 70,000]), an epoxidized diene based block copolymer (manufactured by Daicel Chemical Industries, Ltd., A1020 [epoxidized styrene-butadiene-styrene block copolymer]), and a polyolefin resin (manufactured by Sumitomo Chemical Co., Ltd., AZ564 [polypropylene resin]) were mixed in formulae shown in Tables 1 and 2 in a tumbler. After that, the resultant was melt-kneaded at 255°C by using a biaxial extruder, TEM35B manufactured by Toshiba Corporation to form pellets. The pellets thus obtained were molded into a test piece by using an injection molding machine, IS100P manufactured by Toshiba Corporation, under conditions of a processing temperature of 255°C and a mold temperature of 25°C, and Izod impact strength of the test piece was measured. Further, Melt flow rate of the pellets was measured under conditions of 270°C × 2.16 kg. The results are shown in Tables 1 and 2.

### [Comparative Production Examples 1 to 4]

A recycled polyester resin (manufactured by Taisei Plastics Co. Ltd., PET), a lactone polymer (manufactured by Daicel Chemical Industries, Ltd., PLACCEL H7) (poly(ε-caprolactone) with a number average molecular weight of 70,000]), an epoxidized diene based block copolymer (manufactured by Daicel Chemical Industries, Ltd., A1020 [epoxidized styrene-butadiene-styrene block copolymer]), and a partially hydrogenated styrene-butadiene-styrene block copolymer (manufactured by Asahi Kasei Corporation, Tuftek) were mixed in formulae shown in Table 3 in a tumbler. After that, the resultant was melt-kneaded at 255°C by using a biaxial extruder, TEM35B manufactured by Toshiba Corporation to form pellets. The pellets thus obtained were molded into a test piece by using an injection molding machine, IS100P manufactured by Toshiba Corporation, under conditions of a processing temperature of 255°C and a mold temperature of 25°C, and Izod impact strength of the test piece was measured. Further, Melt flow rate of the pellets was measured under conditions of 270°C × 2.16 kg. The results are shown in Table 3.

As is apparent from Tables 1 to 3, the recycled polyester resin composition of the production examples can be subjected to pelletization (granulation) and injection molding without problems. Further, the obtained injection moldings have excellent impact strength.

**Table 1**

| Production example | 1 | 2 | 3 | 4 | 5 | 6 |
|---|---|---|---|---|---|---|
| Formula (part by weight) | | | | | | |
| Recycled PET | 80 | 80 | 80 | 80 | 80 | 80 |
| PLACCEL H7 | 2 | 4 | 5 | 6 | 7 | 8 |
| A1020 | 8 | 6 | 5 | 4 | 3 | 2 |
| AZ564 | 10 | 10 | 10 | 10 | 10 | 10 |
| Physical properties | | | | | | |
| Izod impact strength (kgfcm/cm²) | 8.0 | 10.4 | 7.9 | 7.6 | 6.7 | 6.4 |
| Melt flow rate (g/10 min) | 41.7 | 50.3 | 51.9 | 60.8 | 65.2 | 62.0 |

**Table 2**

| Production example | 7 | 8 | 9 | 10 | 11 | 12 |
|---|---|---|---|---|---|---|
| Formula (part by weight) | | | | | | |
| Recycled PET | 90 | 90 | 90 | 90 | 90 | 90 |
| PLACCEL H7 | 1 | 2 | 2.5 | 3 | 3.5 | 4 |
| A1020 | 4 | 3 | 2.5 | 2 | 1.5 | 1 |
| AZ564 | 5 | 5 | 5 | 5 | 5 | 5 |
| Physical properties | | | | | | |
| Izod impact strength (kgfcm/cm²) | 6.5 | 6.4 | 6.7 | 6.7 | 6.9 | 5.9 |
| Melt flow rate (g/10 min) | 55.1 | 59.7 | 64.9 | 62.8 | 80.1 | 78.2 |

**Table 3**

| Comparative production example | 1 | 2 | 3 | 4 |
|---|---|---|---|---|
| Formula (part by weight) | | | | |
| Recycled PET | 100 | 90 | 90 | 90 |
| PLACCEL H7 | - | 10 | - | - |
| A1020 | - | - | - | 10 |
| Tuftec | - | - | 10 | - |
| Physical properties | | | | |
| Izod impact strength (kgfcm/cm²) | 2.0 | 4.5 | - | 6.8 |
| Melt flow rate (g/10 min) | - | 90.7 | - | 52.3 |
| Remark | | | Impossible to granulate | Poor moldability |

### [Example 1]

By using each resin obtained in the above-mentioned production examples, porous forms in the form of a flat plate were molded in each of which a number of funnel-like cylinder holes of 12 mm in maximum outer diameter and 8 mm in minimum inner diameter were provided in a plate-like face plate of 180 cm in width, 60 cm in height, and 1.5 mm in thickness. Although the forms were in the form of a flat plate, the funnel-like cylinder holes provided on the side opposite to the concrete placing side of the flat plate serve to increase the strength of the flat plate by virtue of a rib effect of the funnel-like cylinder holes. The funnel-like cylinder holes were convenient for superimposing the forms one on another to store or transport them.

### [Example 2]

By using each resin obtained in the above-mentioned production examples, porous forms were molded in each of which a number of water removing holes of 10 mm in diameter were provided in a plate-like face plate of 180 cm in width, 60 cm in height, and 1.5 mm in thickness, and a small number of semispherical cap-like protrusions of 2 cm in radius were provided on a flat portion of the form. Owing to the semispherical cap-like protrusions, adhesion of concrete to the form is improved, no notch effect is exhibited since their tips were round, and further it is easy to superimpose the forms one on another to store or transport the forms.

### [Example 3]

Porous forms were molded in the same manner as in Example 2 except that conical cap-like protrusions of 1 cm in height and 1 cm in diameter (1.5 mm in wall thickness) were provided outside the concrete placing side of the form and that an air vent hole of 1 mm in height was provided on the tip of each protrusion. Since the protrusions were projected outward, a decrease in strength of concrete is prevented, and it is easy to superimpose the forms one on another to store or transport the forms or to attach supports with a wire. Further, since the outer diameter of the protrusions was made the same as the inner diameter of the water removing holes, by performing molding of forms while appropriately arranging the both, it is easy to extend the forms by superimposing the forms one on another upon installation of the forms.

### [Example 4]

By using each resin obtained in the above-mentioned production examples, tape-like moldings of 20 mm in width and 1 mm in thickness were obtained. A number of tapes were superimposed one on another horizontally and vertically so that they would cross each other at right angles and the tapes were then heat-pressed to thereby mold belt-like porous forms made of a 20m long rolled long sheet of 90 cm in height provided with water removing square holes (8 mm in side length of the square hole). Since the forms are long sheets, the forms can be attached uniformly on a long foundation portion and used by winding them in the form of a column. When heated by using a burner or the like, the forms can be used by being bent at any desired angle including a right angle. Also, the forms can be cut into a desired length for use. Further, as needed, the forms can be used by being superimposed one on another by engaging with square protrusions provided on flanges provided at upper, lower, left, and right ends etc of the belt-like porous forms in the direction in which the face plate extends or in the direction perpendicular to the face plate, or be fixed to or supported by a leveling concrete portion or the like. The flange in this case can be produced from the same resin as the resin used in the form.

### [Example 5]

By using each resin obtained in the above-mentioned production examples, long sheets of 90 cm in width and 1 mm in thickness provided with circular holes (7 mm in hole diameter) were molded. The obtained long sheets can be used in place of the belt-like porous forms obtained in Example 4 described above.

### [Example 6]

Molded by using each resin obtained in the above-mentioned production examples were ribbed porous forms of 120 cm in width, 60 cm in height, and 1.5 mm in thickness, which were each provided with: regular triangular ribs of 10 mm in height formed continuously from the upper end to a position about 5 cm above the lower end at an interval of 10 cm so as to protrude on the concrete placing side of the form, with a flat portion of the face plate being provided with a number of air and excess water removing holes of 10 mm in hole diameter; and a fixing flange portion of 10 cm in bottom width which was provided on the bottom of the ribbed porous forms.

### [Example 7]

Molded by using each resin obtained in the above-mentioned production examples were ribbed porous forms of 120 cm in width, 60 cm in height, and 3 mm in thickness which were each provided with: trapezoidal ribs of 10 cm in bottom width formed continuously from the upper end to a position about 5 cm above the lower end at an interval of 30 cm so as to protrude on the side opposite to the concrete placing side of the form, with a flat portion of the face plate being provided with a number of holes of 10 mm in hole diameter, and with a top surface portion of the trapezoidal ribs being provided with a number of air vent holes of 2 mm in diameter; and a fixing flange portion of 10 cm in bottom width which was provided on the bottom of the ribbed porous forms.

### [Example 8]

By using each resin obtained in the above-mentioned production examples, veneer forms of 90 cm in width, 90 cm in height, and 3 mm in thickness were molded.

The forms obtained in each of the above-mentioned examples were placed opposite to each other at a predetermined interval by use of spacers and were set upright on leveling concrete through flange portions, with wires being arranged between the forms. In the forms, freshly-mixed concrete was flown in and allowed to harden. Concrete foundations could be placed without problems by using any forms. Assembly and detachment operations of supports or the like were easier than in the case of the conventional metal mesh expansion type lath forms.

### Industrial Applicability

The recycled resin forms for use in placing the concrete, which are made of a recycled polyester resin composition, of the present invention has improved formability such as injection moldability and extrusion moldability and excellent mechanical strength, so that the forms can be utilized as, for example, a water-pervious lath form, a placing lath form, a water-pervious porous form, a placing porous form, a water-pervious ribbed porous form, or a placing ribbed porous form, and are extremely cost-effective.

## Claims

1. A recycled resin mould for use in placing concrete, comprising:
(A) 100 parts by weight of a recycled polyester resin;
(B) 0.5 to 20 parts by weight of a lactone polymer;
(C) 0.5 to 30 parts by weight of an epoxidized diene based block copolymer; and
(D) optionally 0.5 to 30 parts by weight of a polyolefin resin.

2. A mould according to claim 1, **characterized in that** resin (A) contains at least a recycled polyethylene terephthalate resin.

3. A mould according to claim 1 or 2, **characterized in that** copolymer (C) is an epoxidized product of a block copolymer or its partially hydrogenated product, comprising a block made of a vinyl aromatic compound and a block made of a conjugated diene compound.

4. A mould according to any one of claims 1 to 3, **characterized in that** resin (D) is a polypropylene resin.

5. A mould according to any one of claims 1 to 4, for use in placing a concrete foundation portion and being embedded underground after the placing.

6. A mould according to any one of claims 1 to 5, being a water-pervious mould, a placing mould, and/or a veneer mould.

7. A mould according to claim 6, **characterized in that** the water-pervious mould or the placing mould is a lath mould, a porous mould and/or a ribbed porous mold.

8. A mould according to claim 6 or 7, **characterized in that** each of the water-pervious lath mould and the placing lath mould is a square plate-like face plate (1) that comprises belts, strings, or threads made of a recycled polyester resin compound which are combined and fused together in a form of a mesh through which water can be removed.

9. A mould according to claim 6, **characterized in that** each of water-pervious mould and the placing porous mould is a square plate-like face plate (1) provided with a number of through holes (4) for removing excess water and air.

10. A mould according to claim 8 or 9, further comprising: a flange portion (2) extending at a lower end of the face plate (1) to a side opposite to a concrete placing side (8), or a flange portion (2a) extending at an upper end of the face plate (1) to a same side as the concrete placing side (8); and optionally a flange portion (2') provided at a left end or a right end of the face plate (1) and arranged in a same plane as the face plate (1) or at right angles with respect to the face plate (1).

11. A mould according to claim 6 or 7, **characterized in that** each of the water-pervious ribbed porous mould and the placing ribbed porous mould comprises a rectangular face plate (1) provided with a number of ribs (3) arranged in a vertical direction of the rectangular face plate (1) at predetermined intervals, the face plate (1) having provided on its flat portion (1') a number of through holes (4), each of the ribs (3) forming a protrusion protruding on a same side as the concrete placing side (8) or on a side opposite to the concrete placing side (8), the formed protrusion being optionally provided with a plurality of air vent holes (7).

12. A mould according to claim 9, further comprising a flange portion (2) extending at a lower end of the face plate (1) to a side opposite to a concrete placing side (8), or a flange portion (2a) extending at an upper end of the face plate (1) to a same side as the concrete placing side (8).

13. A mould according to claim 9 or 10, further comprising ribs (3) which are provided on the face plate (1) from a position slightly above a lower end to an upper end of the face plate (1), or from a position slightly below the upper end to the lower end of the face plate (1).

14. A mould according to any one of claims 1 to 11, which has a thickness that allows it to be readily processed and deformed by heating.

15. A mould according to claim 10 or 12, **characterized in that** the flange portion (2) is provided with a fixing hole (5).

16. A mould according to claim 8, 9 or 11, **characterized in that** the face plate (1) and the flange portion (2) or (2a) form an angle that is slightly smaller than 90°.

17. A mould according to claim 9 or 11, 12, **characterized in that** each of the through holes (4) has
(a) a peripheral portion that is slightly protruding with respect to the face plate (1) in a cylindrical fashion or that is formed in a form of a funnel; or
(b) a circular or rectangular cross section and a diameter or a maximum side of 5 to 15 mm.

18. A mould according to any one of claims 8 to 13, 15 or 16, **characterized in that** the face plate (1) is transparent or translucent.

## Patentansprüche

1. Eine Schalung aus rezykliertem Harz zum Einbringen von Beton, die
(A) 100 Gewichtsteile eines rezyklierten Polyesterharzes,
(B) 0,5 bis 20 Gewichtsteile eines Lactonpolymers,
(C) 0,5 bis 30 Gewichtsteile eines Blockcopolymers auf der Basis eines epoxidierten Diens, und
(D) gegebenenfalls 0,5 bis 30 Gewichtsteile eines Polyolefinharzes
umfasst.

2. Schalung nach Anspruch 1, **dadurch gekennzeichnet, dass** das Harz (A) mindestens ein rezykliertes Polyethylenterephthalatharz enthält.

3. Schalung nach Anspruch 1 oder 2, **dadurch gekennzeichnet, dass** das Copolymer (C) ein epoxidiertes Produkt aus einem Blockcopolymer oder dessen partiell hydriertes Produkt ist, das einen Block, der aus einer vinylaromatischen Verbindung hergestellt ist, und einen Block umfasst, der aus einer konjugierten Dienverbindung hergestellt ist, umfasst.

4. Schalung nach einem der Ansprüche 1 bis 3, **dadurch gekennzeichnet, dass** das Harz (D) ein Polypropylenharz ist.

5. Schalung nach einem der Ansprüche 1 bis 4 zur Verwendung beim Einbringen eines Beton-Fundamentierungsabschnitts, wobei die Schalung nach dem Anordnen im Untergrund eingebettet ist.

6. Schalung nach einem der Ansprüche 1 bis 5, bei der es sich um eine wasserdurchlässige Schalung, eine Einbringschalung und/oder eine Verblendschalung handelt.

7. Schalung nach Anspruch 6, **dadurch gekennzeichnet, dass** die wasserdurchlässige Schalung oder die Einbringschalung eine Lattenschalung, eine poröse Schalung und/oder eine gerippte poröse Schalung ist.

8. Schalung nach Anspruch 6 oder 7, **dadurch gekennzeichnet, dass** jede der wasserdurchlässigen Lattenschalung und der Latten-Einbringschalung eine rechteckige plattenartige Schalungsplatte (1) ist, die Bänder, Fäden oder Stränge aus einer rezyklierten Polyesterharzverbindung umfasst, die in Form eines Netzes kombiniert und miteinander verschmolzen sind, durch das Wasser entfernt werden kann.

9. Schalung nach Anspruch 6, **dadurch gekennzeichnet, dass** jede der wasserdurchlässigen Schalung und der porösen Einbringschalung eine rechteckige plattenartige Schalungsplatte (1) ist, die mit einer Anzahl von Durchgangslöchern (4) zum Entfernen von überschüssigem Wasser und Luft ausgestattet ist.

10. Schalung nach Anspruch 8 oder 9, die ferner einen Flanschabschnitt (2), der sich an einem unterem Ende der Schalungsplatte (1) zu einer Seite erstreckt, die der Seite (8) gegenüber liegt, auf der Beton eingebracht wird, oder einen Flanschabschnitt (2a), der sich an einem oberen Ende der Schalungsplatte (1) zu der Seite (8) erstreckt, auf der Beton eingebracht wird, und gegebenenfalls einen Flanschabschnitt (2') umfasst, der an einem linken Ende oder einem rechten Ende der Schalungsplatte (1) bereitgestellt und in der gleichen Ebene wie die Schalungsplatte (1) oder in einem rechten Winkel bezüglich der Schalungsplatte (1) angeordnet ist.

11. Schalung nach Anspruch 6 oder 7, **dadurch gekennzeichnet, dass** jede der wasserdurchlässigen gerippten porösen Schalung und der gerippten porösen Einbringschalung eine rechteckige Schalungsplatte (1) umfasst, die mit einer Anzahl von Rippen (3) ausgestattet ist, die in einer vertikalen Richtung der rechteckigen Schalungsplatte (1) an vorgegebenen Abständen angeordnet sind, wobei auf dem flachen Abschnitt (1') der Schalungsplatte (1) eine Anzahl von Durchgangslöchern (4) bereitgestellt ist, jede der Rippen (3) eine Vorwölbung bildet, die auf der gleichen Seite wie die Seite (8), auf welcher der Beton eingebracht wird, oder auf einer Seite, die der Seite (8), auf welcher der Beton eingebracht wird, gegenüber liegt, vorgewölbt ist, wobei die gebildete Vorwölbung gegebenenfalls mit einer Mehrzahl von Luft-Belüftungslöchern (7) ausgestattet ist.

12. Schalung nach Anspruch 9, die ferner einen Flanschabschnitt (2), der sich an einem unterem Ende der Schalungsplatte (1) zu einer Seite erstreckt, die der Seite (8) gegenüber liegt, auf der Beton eingebracht wird, oder einen Flanschabschnitt (2a), der sich an einem oberen Ende der Schalungsplatte (1) zu der Seite (8) erstreckt, auf der Beton eingebracht wird, umfasst.

13. Schalung nach Anspruch 9 oder 10, die ferner Rippen (3) umfasst, die auf der Schalungsplatte (1) ausgehend von einer Position, die geringfügig oberhalb eines unteren Endes liegt, bis zu einem oberen Ende der Schalungsplatte (1), oder ausgehend von einer Position, die geringfügig unterhalb des oberen Endes liegt, bis zu dem unteren Ende der Schalungsplatte (1) bereitgestellt sind.

14. Schalung nach einem der Ansprüche 1 bis 11, die eine Dicke aufweist, die derart ist, dass sie eine einfache Verarbeitung und Verformung durch Erwärmen bzw. Erhitzen ermöglicht.

15. Schalung nach Anspruch 10 oder 12, **dadurch gekennzeichnet, dass** der Flanschabschnitt (2) mit einem Fixierloch (5) ausgestattet ist.

16. Schalung nach Anspruch 8, 9 oder 11, **dadurch gekennzeichnet, dass** die Schalungsplatte (1) und der Flanschabschnitt (2) oder (2a) einen Winkel bilden, der geringfügig kleiner ist als 90°.

17. Schalung nach Anspruch 9 oder 11, 12, **dadurch gekennzeichnet, dass** jedes der Durchgangslöcher (4)
(a) einen Umfangsabschnitt aufweist, der bezüglich der Schalungsplatte (1) in einer zylindrischen Weise geringfügig vorgewölbt oder in Form eines Trichters ausgebildet ist, oder
(b) einen kreisförmigen oder rechteckigen Querschnitt und einen Durchmesser oder eine maximale Seitelänge von 5 bis 15 mm aufweist.

18. Schalung nach einem der Ansprüche 8 bis 13, 15 oder 16, **dadurch gekennzeichnet, dass** die Schalungsplatte (1) transparent oder durchscheinend ist.

## Revendications

1. Moule en résine recyclée destiné à être utilisé pour disposer du béton, comprenant :
(A) 100 parties en poids d'une résine polyester recyclée ;
(B) entre 0,5 et 20 parties en poids d'un polymère de lactone ;
(C) entre 0,5 et 30 parties en poids d'un copolymère séquencé à base de diène époxydé ; et
(D) de façon optionnelle, entre 0,5 et 30 parties en poids d'une résine polyoléfine.

2. Moule selon la revendication 1, **caractérisé en ce que** la résine (A) contient au moins une résine de polyéthylène-téréphtalate recyclée.

3. Moule selon la revendication 1 ou 2, **caractérisé en ce que** le copolymère (C) est un produit époxydé d'un copolymère séquencé, ou est un produit partiellement hydrogéné, comprenant une séquence constituée par un composé aromatique du vinyle et une séquence constituée par un composé de diène conjugué.

4. Moule selon l'une quelconque des revendications 1 à 3, **caractérisé en ce que** la résine (D) est une résine de polypropylène.

5. Moule selon l'une quelconque des revendications 1 à 4, destiné à être utilisé pour disposer une partie de fondation en béton, et à être noyé sous terre après la disposition.

6. Moule selon l'une quelconque des revendications 1 à 5, qui est un moule perméable à l'eau, un moule de disposition, et/ou un moule de contreplacage.

7. Moule selon la revendication 6, **caractérisé en ce que** le moule perméable à l'eau ou le moule de disposition est un moule de lattage, un moule poreux et/ou un moule poreux nervuré.

8. Moule selon la revendication 6 ou 7, **caractérisé en ce que** chacun parmi le moule de lattage perméable à l'eau et le moule de lattage de disposition est une plaque à face en forme de plaque carrée (1) qui comprend des courroies, des câbles, ou des fils réalisés en un composé de résine polyester recyclée, qui sont combinés et fondus les uns aux autres sous la forme d'un treillis d'où l'eau peut être retirée.

9. Moule selon la revendication 6, **caractérisé en ce que** chacun parmi le moule perméable à l'eau et le moule poreux de disposition est une plaque à face en forme de plaque carrée (1) munie d'un certain nombre de trous traversants (4) pour retirer l'excès d'eau et d'air.

10. Moule selon la revendication 8 ou 9, comprenant de plus : une partie de flasque (2) s'étendant à une extrémité inférieure de la plaque de face (1) vers un côté opposé à un côté de disposition de béton (8), ou une partie de flasque (2a) s'étendant à une extrémité supérieure de la plaque de face (1) vers un même côté que le côté de disposition de béton (8) ; et, de façon optionnelle, une partie de flasque (2') disposée à une extrémité gauche ou à une extrémité droite de la plaque de face (1) et agencée dans un même plan que la plaque de face (1), ou à angle droit vis-à-vis de la plaque de face (1).

11. Moule selon la revendication 6 ou 7, **caractérisé en ce que** chacun parmi le moule poreux nervuré perméable à l'eau et le moule poreux nervuré de disposition comprend une plaque de face rectangulaire (1) munie d'un certain nombre de nervures (3) agencées dans une direction verticale de la plaque de face rectangulaire (1) à des intervalles prédéterminés, la plaque de face (1) comportant, disposés sur sa partie plate (1'), un certain nombre de trous traversants (4), chacune des nervures (3) formant une saillie faisant saillie d'un même côté que le côté de disposition de béton (8) ou sur un côté opposé au côté de disposition de béton (8), la saillie formée étant, de façon optionnelle, munie d'une pluralité de trous d'évacuation d'air (7).

12. Moule selon la revendication 9, comprenant de plus une partie de flasque (2) s'étendant à une extrémité inférieure de la plaque de face (1) vers un côté opposé à un côté de disposition de béton (8), ou une partie de flasque (2a) s'étendant à une extrémité supérieure de la plaque de face (1) vers un même côté que le côté de disposition de béton (8).

13. Moule selon la revendication 9 ou 10, comprenant de plus des nervures (3) qui sont disposées sur la plaque de face (1) à partir d'une position légèrement supérieure à une extrémité inférieure jusqu'à une extrémité supérieure de la plaque de face (1), ou à partir d'une position légèrement inférieure à l'extrémité supérieure jusqu'à l'extrémité inférieure de la plaque de face (1).

14. Moule selon l'une quelconque des revendications 1 à 11, qui a une épaisseur qui lui permet d'être facilement traité et déformé par chauffage.

15. Moule selon la revendication 10 ou 12, **caractérisé en ce que** la partie de flasque (2) est munie d'un trou de fixation (5).

16. Moule selon la revendication 8, 9 ou 11, **caractérisé en ce que** la plaque de face (1) et la partie de flasque (2) ou (2a) forment un angle qui est légèrement inférieur à 90°.

17. Moule selon la revendication 9 ou 11, 12, **caractérisé en ce que** chacun des trous traversants (4) a :
(a) une partie périphérique qui fait légèrement saillie vis-à-vis de la plaque de face (1) d'une façon cylindrique, ou qui est formée sous la forme d'une entonnoir ; ou
(b) une section transversale circulaire ou rectangulaire et un diamètre ou un côté maximal compris entre 5 et 15 mm.

18. Moule selon l'une quelconque des revendications 8 à 13, 15 ou 16, **caractérisé en ce que** la plaque de face (1) est transparente ou translucide.
